# EUROPÄISCHE PATENTSCHRIFT

(11) **EP 0 341 411 B1**
(45) Veröffentlichungstag und Bekanntmachung des Hinweises auf die Patenterteilung: **18.08.1993**
(21) Anmeldenummer: 89105690.5
(22) Anmeldetag: 31.03.1989
(51) Int. Cl.: B23Q 11/08, E06B 3/48

(54) **Werkzeugmaschine mit umgebendes Verkleidung und Trennwand**
Machine tool with surrounding enclosure and separating wall.
Machine-outil avec enceinte et mûr de separation.

(30) Priorität: 13.04.1988 DE 3812218
(43) Veröffentlichungstag der Anmeldung: 15.11.1989
(73) Patentinhaber: CHIRON-WERKE GMBH & CO. KG, 78532 Tuttlingen (DE)
(72) Erfinder: Rütschle, Eugen, D-7202 Mühlheim (DE)
(74) Vertreter: Witte, Alexander, Dr.-Ing.

(56) Entgegenhaltungen:
- DD-A- 135 872
- US-A- 2 579 910

## Beschreibung

Die Erfindung betrifft eine Werkzeugmaschine mit umgebender Verkleidung und Trennwand, mit einem entlang mehrerer Koordinatenachsen verfahrbaren Spindelstock, mit einem langgestreckten Werkstücktisch, dessen Längsachse zu einer der Koordinatenachsen parallel ist, und mit einer den Spindelstock und den Werkstücktisch umgebenden Verkleidung, wobei in Richtung der zur Längsachse des Werkstücktisches parallelen Koordinatenachse zu beiden Seiten des Spindelstockes eine Trennwand angeordnet ist, die den Zwischenraum zwischen Spindelstock und Seitenwänden der Verkleidung überspannt und längenveränderlich ausgebildet ist und die Trennwand mit starren, jedoch schwenkbaren Wandelementen ausgebildet ist, die mit Stäben gelenkig verbunden sind, die ihrerseits über Gelenke miteinander verbunden sind, derart, daß eine Nürnberger Schere gebildet wird.

Eine Werkzeugmaschine der vorstehend genannten Art ist aus dem Dokument DD-A-135 872 bekannt.

Eine Werkzeugmaschine, die von der Anmelderin unter der Typenbezeichnung FZ 26 L hergestellt wird, weist einen Werkstücktisch mit einer horizontalen Aufspannfläche für Werkstücke auf. Vom Benutzer der Werkzeugmaschine her gesehen ist die Verkleidung an der Längs-Vorderseite mittels einer Mehrzahl von teleskopartig übereinanderschiebbaren Schiebetüren verschließbar, wie dies in dem Dokument DE-A-35 13 944 beschrieben ist.

Der Spindelstock ist, vom Benutzer aus gesehen, hinter dem Werkstücktisch angeordnet. In der zur Längsachse des Werkstücktisches parallelen Achse, der sogenannten x-Achse, ist der Spindelstock entlang einer raumfesten Führungsbahn verfahrbar. Hierzu ist ein auf der Führungsbahn verfahrbarer und den Spindelstock tragender Wagen zu beiden Seiten mit teleskopartig übereinanderschiebbaren Blechabdeckelementen versehen, von denen jeweils eines zu beiden Seiten des Wagens starr mit diesem verbunden ist, ein zweites an den Enden der Führungsbahn raumfest angeordnet ist und sich dazwischen mehrere, übereinanderschiebbare Abdeckelemente befinden.

Auf der Oberseite des Wagens ist der Spindelstock in einer zweiten Achse, der sogenannten y-Achse in Richtung auf den Benutzer zu bzw. von diesem weg verfahrbar. Schließlich kann der Spindelstock auch in der Höhe, der sogenannten z-Achse verfahren werden.

Während sich die Antriebselemente der x-Achse bei der bekannten Werkzeugmaschine an einer raumfesten Position befinden, sind die Antriebselemente für die y-Achse und die z-Achse auf dem Wagen bzw. im Spindelstock angeordnet. Hierzu ist der Wagen mit einem elektrischen Anschluß versehen, der über eine endlich lange Kabelschleife, den sogenannten Kabelschlepp, mit einem raumfesten Anschlußpunkt verbunden ist. Auf diese Weise können die auf dem Wagen bzw. im Spindelstock angeordneten Antriebs-und Steuerelemente mit elektrischer und pneumatischer Energie, mit Steuersignalen, mit Bohrwasser und dgl. versorgt werden.

Zum Bearbeiten von Werkstücken werden in eine Spindelaufnahme des Spindelstocks nacheinander automatisch Werkzeuge eingewechselt, um an einem oder mehreren Werkstücken bestimmte Bohr- und Fräsarbeiten vorzunehmen. Im Zuge der Weiterentwicklung derartiger Werkzeugmaschinen einerseits und in derartigen Werkzeugmaschinen verwendbarer Werkzeuge andererseits, gelangt man heutzutage zu immer größeren Schnittgeschwindigkeiten bei gleichzeitig immer größer werdenden Zeitspanvolumina.

In der Praxis macht sich dies dadurch bemerkbar, daß beim Bearbeiten von Werkstücken immer größere und immer mehr Metallspäne abgehoben und konsequenterweise mit immer größeren Mengen an Bohrwasser in der von der Verkleidung gebildeten Kabine der Werkzeugmaschine umhergeschleudert werden. Dies führt dazu, daß bei solchen modernen Maschinen auch entlegene oder versteckt angeordnete Stellen mit Bohrwasser und Metallspänen beaufschlagt werden.

Ein solcher Bereich der Werkzeugmaschine ist der weiter oben erwähnte Kabelschlepp, der sich - wie erwähnt - hinter der Führungsbahn befindet und in dieser relativ abgeschirmten Position bei Werkzeugmaschinen nach dem Stand der Technik nicht oder nur unwesentlich mit Metallspänen und Bohrwasser beaufschlagt wurde. Im Rahmen der genannten Weiterentwicklung von Werkzeugmaschinen der hier interessierenden Art muß jedoch damit gerechnet werden, daß Metallspäne und Bohrwasser in größerem Ausmaße auch in den Bereich des Kabelschlepps geraten und dort möglicherweise zu Problemen führen.

Aus dem eingangs genannten Dokument DD-A-135 872 ist eine Einrichtung zur Kapselung des Arbeitsraumes von Werkzeugmaschinen bekannt. Bei dieser bekannten Werkzeugmaschine ist ebenfalls ein Spindelstock in horizontaler Richtung an der Rückseite eines langgestreckten Ständerbettes entlang verschiebbar. An dem Spindelstock ist zu beiden Seiten jeweils ein festes, senkrecht verlaufendes Wandelement angeordnet, an das sich zu beiden Seiten nach außen hin teleskopartig ineinander verschiebbare Wandelemente anschließen, von denen das jeweils äußerste wiederum fest mit einer Begrenzungswand verbunden ist. Beim horizontalen seitlichen Verfahren des Spindelstocks verschieben sich damit die teleskopartigen Wandelemente übereinander, indem sie auf der einen Seite zusammengeschoben und auf der anderen Seite auseinandergezogen werden.

Um ein gleichmäßiges Verschieben der Wandelemente zu erreichen, sind bei der bekannten Werkzeugmaschine auf beiden Seiten des Spindelstockes jeweils zwei übereinander angeordnete Nürnberger Scheren vorgesehen. Die Nürnberger Scheren sind mit ihren jeweiligen Endpunkten einerseits an dem festen Wandelement des Spindelstockes und andererseits an der äußeren Verkleidung angeordnet, so daß sie beim Verfahren des Spindelstockes gleichmäßig auseinandergezogen bzw. zusammengeschoben werden. Die mittleren Gelenkpunkte der Nürnberger Schere sind jeweils mit den einzelnen teleskopartig verschiebbaren Wandelementen verbunden. Die von den Nürnberger Scheren aufgespannten Ebenen verlaufen somit parallel zu den Wandelementen und damit ebenfalls vertikal.

Aus dem Dokument US-A-2 579 910 ist eine akkordeonartig gefaltete Tür bekannt. Die bekannte Tür besteht im wesentlichen aus senkrechten, rechteckförmigen Platten, die an ihren Längsseiten z.B. über flexible Streifen aus Gewebe oder Kunststoff miteinander verbunden sind. Die Platten weisen an ihrer Ober-und Unterseite jeweils ein Profil auf, das über ein mittleres Gelenk sowie an den Enden über auskragende Gelenke verfügt. Mittels der auskragenden Gelenke sind mehrere der Platten miteinander in Zick-Zack-Form gelenkig verbunden. Die mittleren Gelenke an den Profilen dienen dazu, um mit entsprechenden Gelenkstangen eines Gelenkvielecks verbunden zu werden, so daß insgesamt in der Draufsicht eine Struktur nach Art einer Nürberger Schere entsteht. Bei der bekannten Tür sind alle Platten gleich breit, auch die beiden Platten am Rande der Tür. Die bekannte Tür ist an einer Seite an einer raumfesten Wand angeschlagen. Zu diesem Zwecke läuft das seitliche freie Ende der Platte ebenso wie das seitliche freie Ende des zugehörigen Gelenkstabes jeweils in einer Langloch-Führung, die sich entlang der Oberfläche der raumfesten Wand erstreckt. Am gegenüberliegenden freien Ende der Wand ist lediglich die seitliche Platte in voller Breite ausgeführt, während der zugehörige Gelenkstab an dem Gelenkpunkt in der Mitte der Platte endet. Das freie Ende der seitlich äußersten Platte läuft mittels einer Rolle z.B. auf einer gegenüberliegenden Wand, um den Zwischenraum zwischen den beiden Wänden zu schließen.

Der Erfindung liegt daher die Aufgabe zugrunde, eine Werkzeugmaschine der eingangs genannten Art dahingehend weiterzubilden, daß die den Bereich hinter den Führungsbahnen vor Metallspänen und Bohrwasser schützende Trennwand bei geringstmöglichem mechanischem Aufwand verkantungsfrei geführt werden kann.

Diese Aufgabe wird erfindungsgemäß dadurch gelöst, daß die schwenkbaren Wandelemente ziehharmonikaartig miteinander gelenkig verbunden sind, daß die Gelenke der Stäbe symmetrisch zu Gelenken der schwenkbaren Wandelemente angeordnet sind, daß die schwenkbaren Wandelemente mit den Stäben in einer zur Oberfläche des Werkstücktisches parallelen Ebene die Nürnberger Schere bilden, und daß der Spindelstock sowie die Seitenwände in Richtung der Längsachse jeweils mit einem starren, nicht-schwenkbaren Wandelement versehen sind, an denen die Trennwände befestigt sind.

Die der Erfindung zugrunde liegende Aufgabe wird auf diese Weise vollkommen gelöst.

Bei der erfindungsgemäßen Werkzeugmaschine wird nämlich die Nürnberger Schere nur zur einen Hälfte durch die Stäbe gebildet, während die andere Hälfte der Schere durch die ziehharmonikaartig miteinander verbundenen Wandelemente selbst gebildet wird. Hierbei macht man sich mit Vorteil die Tatsache zunutze, daß eine ziehharmonikaartig zusammenschiebbare Wand in einer Ansicht von oben bereits die für eine Nürnberger Schere erforderliche, gelenkige Zickzackform aufweist. Daher ist bei der erfindungsgemäßen Werkzeugmaschine die von der Nürnberger Schere aufgespannte Ebene senkrecht zu der der Trennwand und damit parallel zur Oberfläche des Werkstücktisches.

Mit dieser überraschend einfachen Konstruktion wird ein Verkanten der Wandelemente sicher vermieden.

Außerdem hat eine ziehharmonikaartig zusammenschiebbare Trennwand gegenüber einer teleskopartig zusammenschiebbaren Trennwand nach dem Dokument DD-A-135 872 den weiteren wesentlichen Vorteil, daß die Trennwand im völlig zusammengeschobenen Zustand einen wesentlich geringeren axialen Raumbedarf hat, weil eine zusammengeschobene, teleskopartige Trennwand nie auf einen schmaleren Bereich zusammengeschoben werden kann, als dies dem jeweils breitesten Element der Trennwand entspricht, während eine ziehharmonikaartig zusammenschiebbare Trennwand auf einen Raum zusammengeschoben werden kann, der gerade der Summe der Dicken der Wandelemente entspricht.

Die Maßnahme, am Spindelstock und an den Seitenwänden in Richtung der Längsachse starre, nicht-schwenkbare Wandelemente vorzusehen hat den Vorteil, daß dann, wenn der Spindelstock in eine extreme x-Position und gleichzeitig in eine extreme y-Position fährt, die Wandelemente in der x-y-Ebene gekippt werden können und mit ihren jeweiligen äußeren Gelenkpunkten in den Raum neben den starren Wandelmenten eintreten können. Dies hat den Vorteil, daß der Spindelstock auch in solche Extremlagen verfahren werden kann, in denen sich die Spindelachse oberhalb der Ecken des Werkstücktisches befindet.

Bei weiteren bevorzugten Ausgestaltungen der Erfindung läuft jeweils eines von zwei gelenkig miteinander verbundenen Wandelementen in eine zur Achse des Gelenkes konzentrische halbzylindrische erste Achse aus und das andere Wandelement läuft in eine zweite Kante aus, die radial an der halbzylindrischen ersten Kante anliegt.

Diese Maßnahme hat den Vorteil, daß Spalte zwischen den Wandelementen vermieden werden, ohne daß andererseits komplizierte Gelenkanordnungen, beispielsweise Scharnierbänder, erforderlich sind, in denen sich herumfliegende Metallspäne festsetzen und die Scharniere damit blockieren könnten.

Schließlich sind noch Ausführungsformen der Erfindung besonders bevorzugt, bei denen die schwenkbaren Wandelemente mittels steckbarer Zapfen miteinander oder mit den am Spindelstock bzw. an den Seitenwänden angebrachten, nicht-schwenkbaren Wandelementen verbunden sind.

Diese Maßnahme hat den Vorteil, daß die Wandelemente, sei es miteinander, sei es an den jeweiligen Seiten, nach Art von Zimmertüren mit wenigen Handgriffen ein- und ausgehängt werden können. Dadurch wird die Montage und Wartung sowohl der Wandelemente wie auch der gesamten Werkzeugmaschine erheblich vereinfacht.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf ein Ausführungsbeispiel einer erfindungsgemäßen Werkzeugmaschine mit dem Spindelstock in einer Mittelstellung;
- Fig. 2: eine Ansicht, ähnlich Fig. 1, jedoch mit einem in eine Extremstellung verfahrenen Spindelstock;
- Fig. 3: in stark vergrößertem Maßstabe einen unteren Scharnierpunkt zwischen zwei gelenkig miteinander verbundenen Wandelementen der Werkzeugmaschine gemäß Fig. 1 und 2;
- Fig. 4: eine Draufsicht, geschnitten, entlang der Linie IV-IV von Fig. 3.

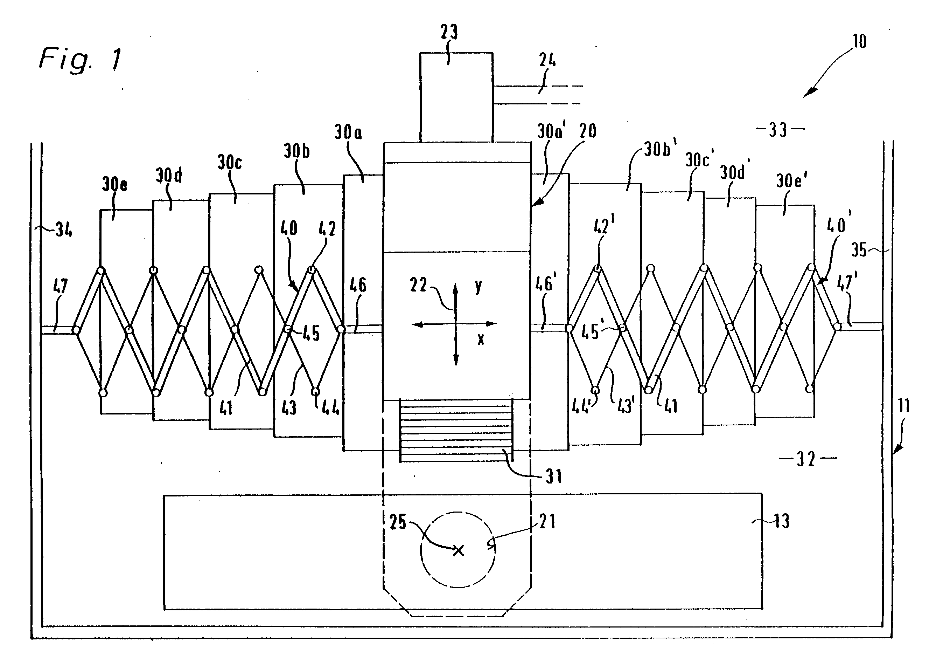

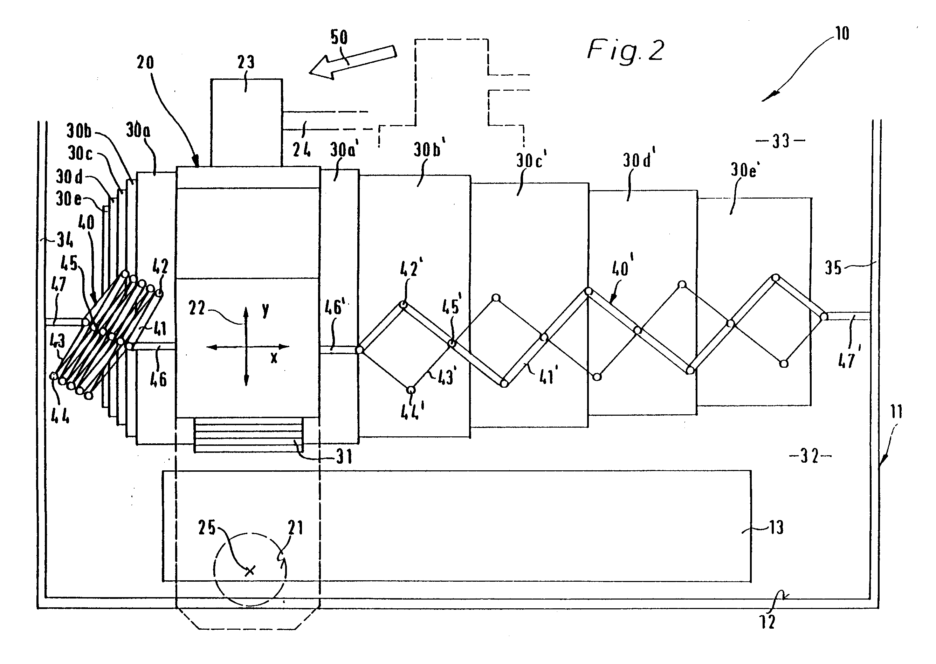

In den Fig. 1 und 2 bezeichnet 10 insgesamt eine Langbett-Werkzeugmaschine, wie sie als sogenanntes Bearbeitungszentrum zum Bohren und Fräsen von Werkstücken eingesetzt wird.

Die Werkzeugmaschine 10 ist mit einer umlaufenden kabinenartigen Verkleidung 11 versehen, um die Umgebung der Werkzeugmaschine 10 vor herumfliegenden Metallspänen und herumspritzendem Bohrwasser zu schützen. An einer Vorderseite 12 ist die Werkzeugmaschine 10 mit in den Fig. nicht näher dargestellten Schiebetüren versehen, um den Zugang zu einem langgestreckten Werkstücktisch 13 freizugeben.

Ein Spindelstock 20 der Werkzeugmaschine 10 weist eine Spindel 21 zur Aufnahme von Werkzeughaltern, insbesondere für Bohr-und Fräsarbeiten auf. Der Spindelstock 20 ist in drei Koordinaten verfahrbar, von denen die Längsachse x, die mit der Längserstreckung des Werkstücktisches 13 zusammenfällt und die dazu senkrechte und ebenfalls horizontale y-Achse mit 22 bezeichnet sind.

Der Spindelstock 20 befindet sich auf einem Wagen, der über einen Kabelschlepp 24, d.h. eine endlich lange Kabelschleife, mit einem raumfesten und in den Fig. ebenfalls nicht dargestellten Anschlußpunkt verbunden ist.

Zur Bewegung des Spindelstocks 20 bzw. des ihn tragenden Wagens in der x-Achse dient ein stationärer Antrieb, während zur Bewegung in der y-Achse und einer vertikalen z-Achse 25 Antriebselemente dienen, die im Spindelstock 20 bzw. dem ihn tragenden Wagen angeordnet sind.

Der Kabelschlepp 24 dient zur Versorgung dieser Antriebe, des Antriebes der Spindel 21 sowie zum Steuern und Regeln der Antriebe, zum Versorgen mit pneumatischer Energie sowie zur Versorgung mit Bohrwasser.

Um die Führungsbahnen, die den Wagen des Spindelstocks 20 in der x-Achse führen, vor Metallspänen und Bohrwasser zu schützen, ist eine teleskopartige Abdeckung aus Elementen 30a bis 30e bzw. 30a′ bis 30e′ zu beiden Seiten des Spindelstocks 20 in x-Richtung vorgesehen. Die Elemente 30a und 30a′ sind dabei mit dem Wagen des Spindelstocks 20 fest verbunden und die äußersten Elemente 30e und 30e′ sind raumfest angeordnet. Wie ein Vergleich der Fig. 1 und 2 zeigt, sind die Elemente 30a bis 30e und 30a′ bis 30e′ gegensinnig so übereinander verschiebbar, daß die darunter befindlichen Führungsbahnen in jeder x-Position des Spindelstocks 20 vollkommen nach oben abgedeckt sind.

In y-Richtung ist der Wagen des Spindelstocks 20 mit einer jalousieartigen Abdeckung 31 oder ebenfalls mit teleskopartigen Abdeckelementen versehen, um die auf dem Wagen angeordneten Führungsschienen in y-Richtung ebenfalls vor Metallspänen und Bohrwasser zu schützen.

In den Fig. 1 und 2 ist der aus der Sicht des Benutzers vordere Raum vor der Teleskopabdeckung 30 mit 32 und der dahinter befindliche Raum mit 33 bezeichnet.

Um den vorderen Raum 32 vom hinteren Raum 33 zu trennen, ist der Zwischenraum zwischen Spindelstock 20 und einer linken Seitenwand 34 einerseits sowie einer rechten Seitenwand 35 andererseits jeweils mit einer Längs-Trennwand 40 bzw. 40′ überbrückt. Die Längs-Trennwand 40, 40′ schließt unten dicht oberhalb der Teleskopabdeckung 30 ab und ist vorzugsweise so hoch wie der Spindelstock 20. Auf diese Weise wird eine vollflächige Abtrennung der Räume 32 und 33 erzielt, so daß die im vorderen Raum 32 herumfliegenden Metallspäne und das herumspritzende Bohrwasser nicht in den hinteren Raum 33 und die dort befindlichen empfindlichen Elemente gelangen können.

Die Längs-Trennwände 40, 40′ bestehen aus starren Wandelementen 41 bzw. 41′, die über vertikalachsige erste Gelenke 42 ziehharmonikaartig miteinander verbunden sind.

Um ein gleichmäßiges Auffalten bzw. Zusammenfalten der Wandelemente 41, 41′ zu erzielen, ist jeweils ein Gelenkvieleck aus Stäben 43 bzw. 43′ vorgesehen, das in der Draufsicht der Fig. 1 und 2 klappsymmetrisch zu den Wandelementen 41, 41′ angeordnet und seinerseits mit zweiten vertikalachsigen Gelenken 44 miteinander und über dritte, ebenfalls vertikalachsige Gelenke 45 mit den Wandelementen 41, 41′ verbunden ist.

Auf diese Weise entsteht in einer zur Oberfläche des Werkstücktisches 13 parallelen Ebene eine sogenannte Nürnberger Schere, die sich dadurch auszeichnet, daß alle Abschnitte des Gelenkvielecks sich gleichmäßig auf- bzw. zusammenfalten und daß die Mittellinie des Gelenkvielecks stets eine Gerade ist.

Im Ausführungsbeispiel der Fig. 1 und 2 ist zu beiden Seiten des Spindelstocks 20 in Richtung der x-Achse jeweils ein erstes starres Wandelement 46 bzw. 46′ vorgesehen, das an seinem auskragenden Ende das erste der ersten Gelenke 42 bzw. 42′ trägt. Am gegenüberliegenden Ende der Trennwände 40, 40′ befinden sich entsprechende zweite starre Wandelemente 47 bzw. 47′ an den Seitenwänden 34, 35, wobei diese zweiten starren Wandelemente 47, 47′ das jeweils letzte der ersten Gelenke 42 bzw. 42′ tragen.

Aus Fig. 2 wird deutlich, daß die starren Wandelemente 46, 47 bzw. 46′, 47′ dazu dienen, um dem Spindelstock 20 ein Anfahren von extremen Eckpositionen auf dem Werkstücktisch 13 zu gestatten. Wenn nämlich der Spindelstock 20 sich lediglich in der von den starren Wandelementen 47 und 47′ gebildeten x-Achse bewegt, so liegen alle ersten und zweiten Gelenke 42, 44 in Extrempositionen des Spindelstocks 20 in der x-Achse auf zur x-Achse parallelen Geraden. Wird nun der Spindelstock 20 zusätzlich in y-Richtung verfahren, so kann er dann zusätzlich noch weiter in x-Richtung verfahren werden, wenn die ersten und zweiten Gelenke 42, 44 bzw. 42′, 44′ seitlich ausweichen können, wie dies deutlich am linken Rand von Fig. 2 erkennbar ist.

Um die Räume 32, 33 möglichst vollkommen gegeneinander abzudichten, ist es erforderlich, daß die Trennwände 40, 40′ im Bereich der ersten Gelenke 42, 42′ spaltfrei sind. Dies gilt auch deswegen, weil sich ansonsten herumfliegende Metallspäne in Spalten der ersten Gelenke 42, 42′ festsetzen und die Funktion dieser ersten Gelenke 42, 42′ behindern oder verhindern würden.

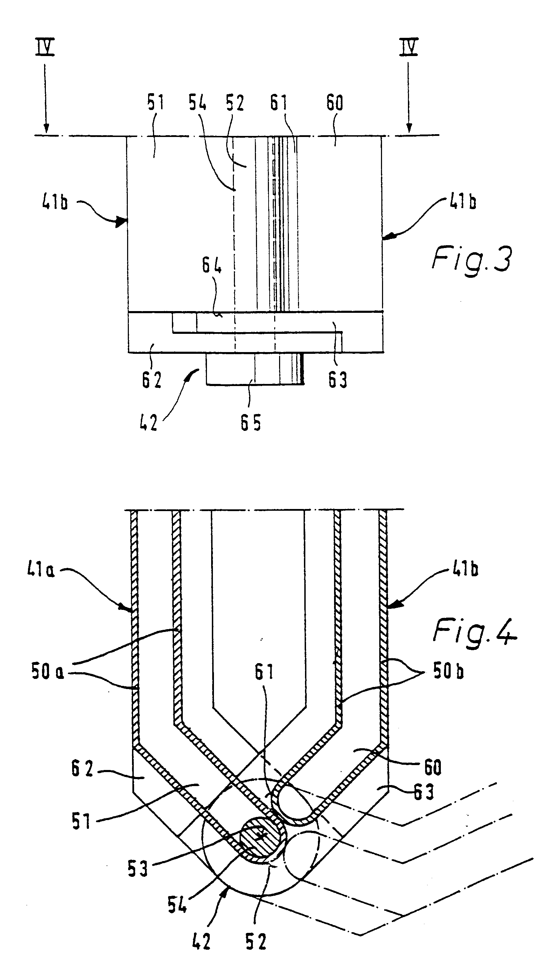

In den Fig. 3 und 4 ist nun ein Ausführungsbeispiel der Erfindung dargestellt, bei dem eine vollkommene Dichtigkeit bei praktisch spaltfreier Ausbildung der ersten Gelenke 42 erreicht wird.

Aus der Draufsicht der Fig. 4 erkennt man, daß die beiden dargestellten Wandelemente 41a und 41b als Doppelwände 50a, 50b ausgebildet sind. Die Doppelwand 50a des Wandelementes 41a ist in Fig. 4 nach unten bei 51 abgekröpft und läuft in eine erste halbzylindrische Kante 52 senkrecht zur Zeichenebene der Fig. 4 aus. Die erste halbzylindrische Kante 52 verläuft koaxial zur Achse 53 des ersten Gelenkes 42 und man erkennt in der Schnittdarstellung der Fig. 4 einen Zapfen 54, der ein Teil des ersten Gelenkes 42 ist.

Die Doppelwand 50b des anderen Wandelementes 41b ist ebenfalls in Fig. 4 nach unten bei 60 abgekröpft und sie läuft auch in eine zweite halbzylindrische Kante 61 aus. Die Mittelachse des bei 60 abgekröpften Abschnittes der weiteren Doppelwand 50b verläuft radial zur Achse 53.

Die Wandelemente 41a und 41b sind an der Unterkante - und ebenso, wenngleich in den Fig. nicht dargestellt - in komplementärer Weise an der Oberkante - mit Flanschen 62, 63 versehen, die komplementär gestuft ausgebildet sind, wie man deutlich aus Fig. 3 erkennt. Zwischen dem ersten Flansch 62 und der bei 51 abgekröpften ersten Doppelwand 50a ist eine Ausnehmung 64 vorgesehen, in die ein abgesetzter Abschnitt des zweiten Flansches 63 greift. In diesem Bereich sind die Flansche 62, 63 vom Zapfen 54 durchdrungen, der seinerseits nach unten in einen Kopf 65 ausläuft.

Wie man deutlich aus Fig. 4 erkennt, bewirkt die vorstehend beschriebene Anordnung, daß beim Falten der Längs-Trennwand 40 die Wandelemente 41a und 41b um die Achse 53 derart gegeneinander verschwenkt werden, daß die zweite halbzylindrische Kante 61 spaltfrei auf der ersten halbzylindrischen Kante 52 läuft, wie strichpunktiert in Fig. 4 eingetragen ist. Die zweite Kante 61 braucht dabei nicht halbzylindrisch ausgebildet zu sein, sie kann vielmehr auch spitz gestaltet sein und muß lediglich radial zur Achse 53 auf der ersten halbzylindrischen Kante 52 aufliegen.

Die Wandelemente 41a, 41b können in einfacher Weise durch Herausnehmen der Zapfen 54 voneinander gelöst werden. Andererseits können die Wandelemente 41a oder 41b auch an ihren anderen Kanten mit weiteren Wandelementen oder mit den starren Wandelementen 46 oder 47 verbunden werden, indem z.B. an den starren Wandelementen 46, 47 bzw. 46′, 47′ türangelartige Elemente vorgesehen werden, durch die ebenfalls die Zapfen 54 geführt werden. Auf diese Weise können die Wandelemente 41 wie Zimmertüren ein- und ausgehängt werden.

## Patentansprüche

1. Werkzeugmaschine mit umgebender Verkleidung und Trennwand, mit einem entlang mehrerer Koodinatenachsen (x, y) verfahrbaren Spindelstock (20), mit einem langgestreckten Werkstücktisch (13), dessen Längsachse zu einer der Koordinatenachsen (x) parallel ist, und mit einer den Spindelstock (20) und den Werkstücktisch (13) umgebenden Verkleidung (11), wobei in Richtung der zur Längsachse des Werkstücktisches (13) parallelen Koordinatenachse (x) zu beiden Seiten des Spindelstockes (20) eine Trennwand (40, 40') angeordnet ist, die den Zwischenraum zwischen Spindelstock (20) und Seitenwänden (34, 35) der Verkleidung (11) überspannt und längenveränderlich ausgebildet ist, und die Trennwand (40, 40') mit starren, jedoch schwenkbaren Wandelementen (41, 41') ausgebildet ist, die mit Stäben (43, 43') gelenkig verbunden sind, die ihrerseits über Gelenke (44, 44') miteinander verbunden sind, derart, daß eine Nürnberger Schere gebildet wird, dadurch gekennzeichnet, daß die schwenkbaren Wandelemente (41, 41') zieharmonikaartig miteinander gelenkig verbunden sind, daß die Gelenke (44, 44') der Stäbe (43, 43') symmetrisch zu Gelenken (42, 42') der schwenkbaren Wandelemente (41, 41') angeordnet sind, daß die schwenkbaren Wandelemente (41, 41') mit den Stäben (43, 43') in einer zur Oberfläche des Werkstücktisches (13) parallelen Ebene die Nürnberger Schere bilden, und daß der Spindelstock (20) sowie die Seitenwände (34, 35) in Richtung der Längsachse (x) jeweils mit einem starren, nicht-schwenkbaren Wandelement (46, 46', 47, 47') versehen sind, an denen die Trennwände (40, 40') befestigt sind.

2. Werkzeugmaschine nach Anspruch 1, dadurch gekennzeichnet, daß jeweils eines von zwei gelenkig miteinander verbundenen Wandelementen (41a) in eine zur Achse (53) des Gelenkes (42) konzentrische halbzylindrische erste Kante (52) ausläuft und daß das andere Wandelement (41b) in eine zweite Kante (61) ausläuft, die radial an der halbzylindrischen ersten Kante (52) anliegt.

3. Werkzeugmaschine nach Anspruch 1 oder 2, dadurch gekennzeichnet, daß die schwenkbaren Wandelemente (41, 41') mittels steckbarer Zapfen (52) miteinander oder mit den am Spindelstock (20) bzw. an den Seitenwänden (34, 35) angebrachten, nicht-schwenkbaren Wandelementen (46, 46', 47, 47') verbunden sind.

## Claims

1. A machine tool having a surrounding housing and a partition wall, comprising: a spindle stock (20) displaceable along several coordinate axes (x, y), an elongate workpiece table (13) with a longitudinal axis extending parallel to one of the coordinate axes (x), a housing (11) surrounding the spindle stock (20) and the workpiece table (13), wherein a partition wall (40, 40') is provided on both sides of the spindle stock (20) in the direction of the coordinate axis (x) extending parallel to the workpiece table (13) longitudinal axis, the partition wall (40, 40') spanning the gap between the spindle stock (20) and side walls (34, 35) of the housing (11), and being variable in length, and being composed from rigid yet swivelable wall elements (41, 41') hinged to each other by means of bars (43, 43') in a parallelogram linkage arrangement, the bars (43, 43'), in turn, being connected to each other via hinges (44, 44'), characterized in that the swivelable wall elements (41, 41') are hinged with each other in an accordion-type fashion, that the hinges (44, 44') of the bars (43, 43') are arranged symmetrically to hinges (42, 42') of the swivelable wall elements (41, 41'), that the swivelable wall elements (41, 41') form the parallelogram linkage with the bars (43, 43') in a plane parallel to the workpiece table (13) surface, and that both the spindle stock (20) and the side walls (34, 35) are each provided with a rigid, non-swivelable wall element (46, 46', 47, 47') to which the partition walls (40, 40') are connected, the rigid wall elements (46, 46', 47, 47') extending along the longitudinal axis (x).

2. The machine tool of claim 1, characterized in that one each of two wall elements (41a) being hinged with each other terminates in a semi-circular first edge (52) being concentric to an axis (43) of the hinge (42), and that the respective other wall element (41b) terminates in a second edge (61) contacting the semi-circular first edge (52) radially.

3. The machine tool of claim 1 or 2, characterized in that the swivelable wall elements (41, 41') are connected with each other or with the non-swivelable wall element (46, 46', 47, 47') arranged on the spindle stock (20) or on the side walls (34, 35), respectively, by means of plug-pins (52).

## Revendications

1. Machine-outil avec revêtement d'entourage et cloison de séparation, avec une poupée (20) pouvant être déplacée le long de plusieurs axes de coordonnées (x, y), avec une table porte-pièces (13) allongée, dont l'axe longitudinal est parallèle à l'un des axes de coordonnées (x), et avec un revêtement (11) entourant la poupée (20) et la table porte-pièces (13), dans laquelle est disposée, dans la direction de l'axe de coordonnées (x) parallèle à l'axe longitudinal de la table porte-pièces (13) des deux côtés de la poupée (20), une cloison de séparation (40, 40'), qui s'étend à travers l'espace compris entre la poupée (20) et les parois latérales (34, 35) du revêtement (11) et qui est conçue de manière modifiable en longueur, et la cloison de séparation (40, 40') est formée d'éléments de paroi (41, 41') rigides, mais pivotants, qui sont reliés de manière articulée par des barres (43, 43') qui sont reliées à leur tour entre elles par des articulations (44, 44') de façon à former une pince extensible, **caractérisée en ce que** les éléments de paroi pivotants (41, 41') sont reliés entre eux de manière articulée en accordéon, en ce que les articulations (44, 44') des barres (43, 43') sont disposées de manière symétrique par rapport à des articulations (42, 42') des éléments de paroi pivotants (41, 41'), en ce que les éléments de paroi (41, 41') forment la pince extensible avec les barres (43, 43') dans un plan parallèle à la table porte-pièces (13), et en ce que la poupée (20) et les parois latérales (34, 35) sont, pourvues, chacune dans le sens de l'axe longitudinal (x), d'un élément de paroi (46, 46', 47, 47') rigide non pivotant, sur lequel les cloisons de séparation (40, 40') sont fixées.

2. Machine-outil selon la revendication 1, caractérisée en ce que l'un des éléments de paroi (41a) reliés entre eux de manière articulée se termine par un premier bord semi-cylindrique (52) concentrique de l'axe (53) de l'articulation (42) et en ce que l'autre élément de paroi (41b) se termine par un second bord (61), qui est contigu dans le sens radial du premier bord semi-cylindrique (52).

3. Machine-outil selon la revendication 1 ou 2, caractérisé en ce que les éléments de paroi pivotants (41, 41') sont reliés, au moyen de goupilles (52) pouvant être insérées, entre eux ou avec les éléments de paroi (46, 46', 47, 47') non pivotants disposés sur la poupée (20) ou sur les parois latérales (34, 35).
